# EUROPÄISCHE PATENTSCHRIFT

(11) **EP 0 771 065 B1**
(45) Veröffentlichungstag und Bekanntmachung des Hinweises auf die Patenterteilung: **05.01.2000**
(21) Anmeldenummer: 96116072.8
(22) Anmeldetag: 08.10.1996
(51) Int. Cl.: H02P 1/30

(54) **Verfahren zum Anlaufen drehzahlveränderlicher elektrischer Antriebe**
Start-up method for a rotating variable speed electrical drive
Procédé pour le démarrage d'un entraînement électrique à vitesse de rotation variable

(30) Priorität: 25.10.1995 DE 19539656
(43) Veröffentlichungstag der Anmeldung: 02.05.1997
(73) Patentinhaber: KSB Aktiengesellschaft, 67227 Frankenthal (DE)
(72) Erfinder: Fetz, Joachim, Dr., 67227 Frankenthal (DE)

(56) Entgegenhaltungen:
- EP-A- 0 506 985
- DE-A- 3 048 097
- DE-C- 3 210 761
- DE-C- 4 215 263
- DE-C- 4 215 266
- GB-A- 2 176 667
- PATENT ABSTRACTS OF JAPAN vol. 13, no. 26 (E-706) [3374] , 20.Januar 1989 & JP 63 228982 A (MITSUBISHI ELECTRIC CORP), 22.September 1988,
- PATENT ABSTRACTS OF JAPAN vol. 9, no. 295 (E-360) [2018] , 21.November 1985 & JP 60 134781 A (MATSUSHITA DENKI SANGYO K.K.), 18.Juli 1985,

## Beschreibung

### Stand der Technik

Oftmals werden blockierte Pumpen oder Antriebe zerlegt und gereinigt, damit ein Weiterbetrieb möglich ist. Eine weitere Möglichkeit besteht darin, durch mechanische Krafteinwirkung auf die Welle des Motors oder der Arbeitsmaschine die Blockierung zu lösen bzw. das erhöhte Anlaufdrehmoment zu verringern. Beispielsweise wird in der DE 32 10 761 C1 empfohlen, mit einem Schraubenzieher die Welle loszubrechen, falls diese blockiert ist.

Ein grundsätzlich anderer Weg als der eines mechanischen Eingriffs wird in der DE 42 15 263 C1 während des Anlaufvorganges eines Einphasen-Induktionsmotors mittels einer Steuerung eingeschlagen. Durch eine besondere elektrische Schaltung wird dafür gesorgt, daß der zeitliche Momentenverlauf des Motors stets größer oder kleiner Null ist. Hohe Momentenspitzen sorgen dafür, daß zumindest kurzzeitig ein besonders hohes Drehmoment zum Anfahren zur Verfügung steht, wobei dieses Moment auch pulsiert, so daß ein gewisser Rütteleffekt erreicht wird, der das Anfahren auch unter ungünstigen Umständen ermöglicht. Nach Erreichen bestimmter vorgegebener Größen wird die Anlaufeinrichtung deaktiviert.

In der DE 42 15 266 C1 wird vorgeschlagen, daß der Einphasen-lnduktionsmotor während der Deblockierungsphase zur Erzeugung eines in seiner Richtung sich ändernden Drehmoments elektrisch angesteuert wird. Das Anlaufverhalten ist allerdings unabhängig vom tatsächlichen Zustand der angetriebenen Pumpe und erfolgt bei jedem Neustart. Eine Kontrolle über die Notwendigkeit des besonderen Anlaufverhaltens findet nicht statt.

Eine weitere bekannte Maßnahme besteht darin, den Antrieb insgesamt auf eine höhere Leistung hin auszulegen, die dann aber nur in Ausnahmefällen benötigt wird.

Durch die JP-A-63228982 ist eine Steuerschaltung bekannt, bei welcher ein nicht näher spezifizierter Strom I gemessen und mit einem Maximalwert Iₘₐₓ verglichen wird. Um ein Hochlaufen des Antriebes mit Überstrom zu vermeiden, wird die Anstiegsgeschwindigkeit der Ständerfrequenz, also die Steilheit der Anfahrrampe, so lange reduziert, bis Iₘₐₓ nicht mehr überschritten wird. Es findet somit ein Hochlaufen an der Stromgrenze statt.

Aufgabe der Erfindung ist es, ein Verfahren zum Anlaufen elektrischer Antriebe und einen Antrieb bereitzustellen, welche in der Lage sind, vorübergehende Blockierungen oder kurzzeitige Erhöhungen des Anlaufdrehmoments festzustellen und welche nur bei Bedarf automatisch Gegenmaßnahmen in Gang setzen und selbst beenden.

### Darstellung der Erfindung

Die Aufgabe wird durch ein Verfahren gelöst, bei dem während des Anlaufvorganges bei sich erhöhendem Drehmoment des Antriebes der Anlaufstrom I_{A} erfaßt und mit einem Maximalstrom Iₘₐₓ verglichen wird. Bei Erreichen des Maximalstroms Iₘₐₓ wird der Absolutwert des Drehmomentes des Antriebes auf Null verringert und danach wird das Vorzeichen des Drehmomentes umgekehrt. Anschließend wird der Absolutwert des Drehmomentes mit dem neuen Vorzeichen erhöht. Diese Verfahrensschritte werden solange wiederholt, bis der Maximalstrom Iₘₐₓ nicht mehr erreicht wird und der Antrieb mit der gewünschten Drehrichtung ordnungsgemäß hochfährt oder bis der Maximalstrom Iₘₐₓ nicht mehr erreicht wird, der Antrieb aber die falsche Drehrichtung besitzt, worauf das Vorzeichen des Drehmomentes bei Erreichen der Grenzfrequenz f_{G} umgekehrt wird und danach der Antrieb mit der gewünschten Drehrichtung ordnungsgemäß hochfährt oder bis eine bestimmte Anzahl von Drehmomentsänderungen vorgenommen wurde oder eine bestimmte Zeit abgelaufen ist, worauf der Antrieb abgeschaltet wird.

Der blockierte Antrieb wird dadurch erkannt, daß bei zunehmendem Drehmoment der Anlaufstrom viel größer wird, als er eigentlich zu erwarten war. Die Reaktion des Verfahrens besteht in der Verringerung des Drehmomentes bei Erreichen des Maximalstroms und in der Umkehrung der Drehrichtung mit nachfolgendem erneuten Anstieg des Absolutwertes des Drehmomentes bei geändertem Vorzeichen, bis der Maximalstrom erneut erreicht wird. Danach wird das Drehmoment wieder umgekehrt, und das Verfahren wird erneut durchgeführt. Dies geschieht solange, bis der Antrieb losgebrochen ist und der Maximalstrom bei einer mit der richtigen Drehrichtung anlaufenden Arbeitsmaschine nicht mehr erreicht wird. Somit wird ein Losrütteln der blockierten oder behinderten Teile bei gleichzeitiger Begrenzung des Anlaufstroms auf einen Maximalwert erreicht. Für den Fall, daß eine mit Hilfe des Losrüttelns nicht zu lösende Blockierung vorliegt, erfolgt die Abschaltung des Antriebes.

Eine zweckmäßige Weiterbildung des Verfahrens für drehzahlveränderliche Antriebe besteht darin, daß der Anlaufvorgang mit einer niedrigen Ständerfrequenz f_{S} erfolgt. Ein blockierter Antrieb wird dann erkannt, wenn der Strom viel größer ist als er bei der mit einem Frequenzumformer eingestellten Ständerfrequenz sein sollte. Der Antrieb kann dabei mit einer niedrigen Ständerfrequenz f_{S}, die auch Null sein kann, gestartet werden, wobei die Frequenz und das Drehmoment zunächst in der gewünschten Drehrichtung angehoben werden. Wird der Maximalstrom erreicht, bevor der Absolutwert der Ständerfrequenz größer ist als die Grenzfrequenz f_{G,} wird der Absolutwert der Ständerfrequenz reduziert, bis sich schließlich das Vorzeichen der Ständerfrequenz umgekehrt. Damit ändert sich bei blockiertem Antrieb auch das Drehmoment und dessen Richtung, bis in der umgekehrten Drehrichtung wiederum der Maximalstrom Iₘₐₓ erneut erreicht wird. Danach erfolgt wieder eine Umkehr und eine Fortführung des Verfahrens, bis der Maximalstrom nicht mehr erreicht oder das Verfahren abgebrochen wird. Nach Kontrolle und Einstellen der gewünschten Drehrichtung wird der Antrieb hochgefahren.

Vorteilhafterweise wird der Maximalstrom Iₘₐₓ so gewählt, daß er den Nennstrom I_{N} nur geringfügig übersteigt. Dies führt zu einer verbesserten Dimensionierung des Antriebs. Insbesondere kann der Maximalstrom in einem Bereich des etwa 1,2- bis 2-fachen des Nennstroms liegen.

Eine zweckmäßige Ausgestaltung der Erfindung sieht vor, daß während des Anlaufvorganges nach Erreichen des Maximalstromes Iₘₐₓ die Motorspannung U_{M} schrittweise erhöht und nach Beendigung des Anlaufvorganges wieder auf einen normalen Betriebswert U_{M,N} eingestellt wird. Eine zusätzliche Anhebung der Motorspannung während der Losrüttelphase erhöht das zur Verfügung stehende Drehmoment.

Zur Vergleichsmessung eignet sich bei wenig dynamischen, kostengünstigen Antrieben vor allem der Zwischenkreisstrom; bei hochdynamischen Antrieben kann ein aus mindestens zwei Strangströmen berechneter Vergleichsstrom verwendet werden.

Eine erfindungsgemäße Vorrichtung zur Durchführung des Verfahrens, die insbesondere für Kreiselpumpen geeignet ist, zeichnet sich aus durch eine Strommeßeinrichtung, welche den Anlaufstrom I_{A} erfaßt, wobei Vergleichsmittel vorgesehen sind, welche den gemessenen Anlaufstrom I_{A} mit einem vorgegebenen Strom vergleichen, außerdem sind Mittel vorhanden, durch welche bei Erreichen des Maximalstromes Iₘₐₓ der Absolutwert des Drehmomentes des Antriebes auf Null verringert, danach das Vorzeichen des Drehmomentes umgekehrt und schließlich der Absolutwert des Drehmomentes mit dem neuen Vorzeichen erhöht wird.

Entsprechend der Art des Antriebes kann die Strommeßeinrichtung im Zwischenstromkreis angeordnet sein, oder die Strommeßeinrichtung ist in mindestens zwei Strängen angeordnet. Im letzteren Fall sind zusätzlich Mittel vorzusehen, die aus den gemessenen Strangströmen einen Vergleichswert erzeugen.

Ein mit einem Frequenzumformer versehener elektrischer Antrieb erlaubt eine abgestufte oder kontinuierliche Veränderung des Motordrehmomentes und der Ständerfrequenz. Dabei kann der Anlaufstrom relativ gering gehalten werden.

### Kurzbeschreibung der Figuren

Es zeigen die
- Fig. 1: eine Diagrammdarstellung des Verfahrensablaufes bezüglich der Ständerfrequenz f_{S}, des Drehmomentes M, des Anlaufstromes I_{A} und der Drehzahl N; die
- Fig. 2: eine Diagrammdarstellung bei sich verändernder Motorspannung U_{M}, die
- Fig. 3: eine schematische Darstellung eines Drehstromantriebs gemäß der Erfindung.

### Weg zur Ausführung der Erfindung

Das Verfahren wird anhand der Ständerfrequenz f_{S}, des Momentes M, des Anlaufstromes I_{A}und der Drehzahl N, dargestellt im Diagramm über der Zeitachse t erläutert. Um einen geringen Anlaufstrom zu erhalten, wird der Antrieb mit einer zunächst geringen Ständerfrequenz erregt. Die Ständerfrequenz f_{S} wird dann stetig erhöht, wodurch auch das Drehmoment M und der Anlaufstrom I_{A} stetig anwächst.

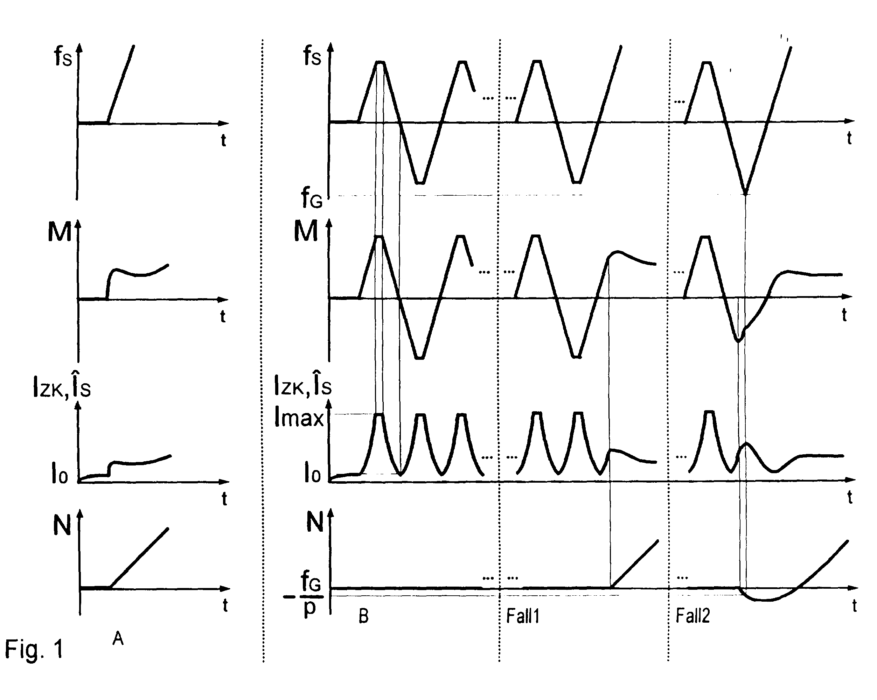

Links in Fig. 1 ist ein normaller Fall A gezeichnet, in dem der Antrieb nicht blockiert ist und nach Überwinden der Haftreibung normal hochläuft. Im rechten Teil von Fig. 1 ist der Antrieb bzw. eine Arbeitsmaschine zunächst blockiert und die Drehzahl bleibt Null, Fall B. Bei Erreichen eines Maximalstromes Iₘₐₓ wird die Ständerfrequenz f_{S} und damit das Drehmoment M, das proportional zur Ständerfrequenz ist, reduziert, bis sich das Vorzeichen der Ständerfrequenz und des Drehmomentes umdreht. Nach dem Nulldurchgang der Ständerfrequenz bzw. des Drehmomentes steigt der Anlaufstrom erneut an. Wird, diesmal bei umgekehrtem Drehmoment, der Maximalstrom Iₘₐₓ erneut erreicht, d. h., ist die Arbeitsmaschine noch immer blockiert, so wird die Ständerfrequenz und damit das Drehmoment zunächst absolut verringert und dann wieder solange absolut erhöht, bis erneut der Maximalstrom Iₘₐₓ erreicht wird. Bleibt der Anlaufstrom nach mehreren Umkehrungen bzw. einem gewissen Zeitablauf nicht unter Iₘₐₓ, so wird der Anlaufvorgang abgebrochen.

Für den Fall, daß durch das Verfahren ein Losrütteln stattgefunden hat, gibt es zwei Möglichkeiten, wie das Verfahren hierauf reagieren wird.

Im Fall 1 löst sich der Antrieb bzw. die Arbeitsmaschine bei richtiger Momentenrichtung, d. h. in der zur Erzeugung einer Drehung gewünschten Richtung. Nach dem Losrütteln erfolgt ein Anheben der Frequenz, bis die gewünschte Drehzahl erreicht wird. Das Drehmoment nimmt gemäß der Lastcharakteristik mit der Drehzahl zu.

Im Fall 2 wird der Antrieb zwar deblockiert, startet aber wegen der negativen Momentenrichtung in der falschen Drehrichtung. Bei Erreichen einer Grenzfrequenz f_{G}, die mit negativem Vorzeichen einen höheren Absolutbetrag hat als die beim Losrütteln erreichte Ständerfrequenz beim Strom Iₘₐₓ, wird das Drehmoment zunächst wieder absolut verringert, um dann mit umgekehrtem Vorzeichen in richtiger Richtung erhöht zu werden. Daraufhin stellt sich der ungestörte Anlaufvorgang ein.

Der Strom I₀ stellt sich nach Einschalten des Frequenzumrichters bei der Frequenz f_{S} = 0 im stationären Betrieb ein.

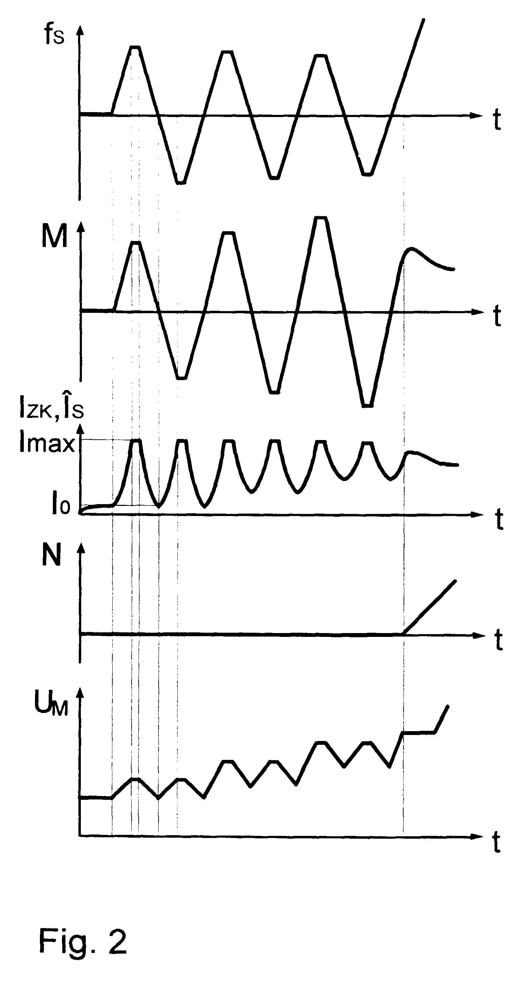

Im Diagramm von Fig. 2 wird das Verhalten des Verfahrens bei sich erhöhender Motorspannung während des Anlaufvorganges beschrieben. Die Motorspannung U_{M} wird bei den einzelnen Losrüttelperioden sukzessive bis zu einem zulässigen Grenzwert erhöht, wodurch sich der Magnetisierungsstrom I₀ und damit bei gleichem Maximalstrom Iₘₐₓ das maximale Losrüttelmoment vergrößert. Dabei sinkt die Ständerfrequenz leicht ab.

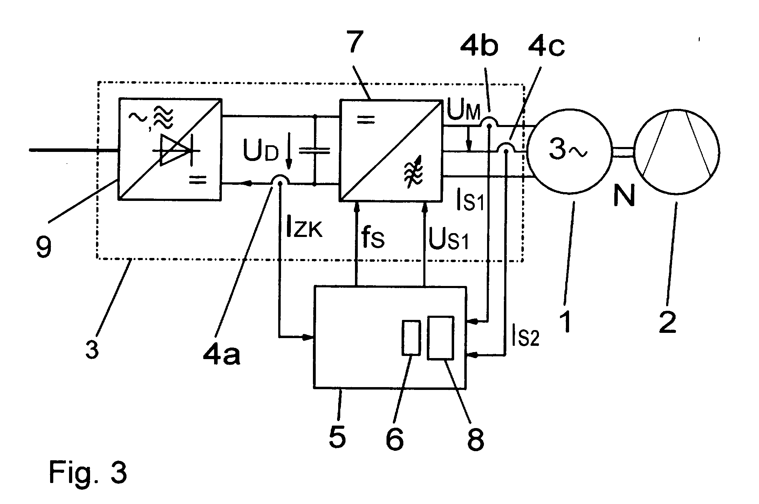

Wie sich am Beispiel eines schematisch in Fig. 3 dargestellten eines Drehstromantriebes erläutern läßt, können zur Überwachung des Stromes entweder der Zwischenkreisstrom I_{ZK} oder die Strangströme I_{S1} bzw. I_{S2} herangezogen werden. Ein Drehstromantrieb 1 wirkt auf eine Kreiselpumpe 2 als Beispiel einer Arbeitsmaschine ein. Der Antrieb 1 ist mit einer elektrischen Vorrichtung 3 ausgerüstet. Die elektrische Vorrichtung 3 ist mit einer Strommeßeinrichtung 4a,4b,4c versehen, die mit einer Steuereinheit 5 zusammenwirkt. In dieser Steuereinheit 5 sind weiterhin Vergleichsmittel 6 für den gemessenen Strom mit einem vorgegebenen Strom vorgesehen. Ein Frequenzumformer 7 als Mittel zur Umkehrung und/oder Verringerung und Erhöhung des Motordrehmomentes speist den Antrieb 1. Weiterhin können Mittel 8 angeordnet sein, die aus mindestens zwei Strangströmen I_{S1}, I_{S2} einen Vergleichswert erzeugen. Eine Gleichrichtereinheit 9 erzeugt aus einem ein- oder mehrphasigem Wechselstromnetz eine Gleichspannung zur Speisung des Frequenzumrichters.

Bei der Messung des Zwischenkreisstromes I_{ZK} verhält sich I_{ZK} proportional zu M²/U_{D}, wobei U_{D} die Zwischenkreisgleichspannung des Frequenzumrichters ist. Dieser Vergleichsstrom eignet sich insbesondere dann, wenn wenig dynamische Antriebe verwendet werden, beispielsweise aus Kostengründen, da nur ein Meßgerät zur Messung des Stromes erforderlich ist.

Bei Antrieben, bei welchem die Messung von mindestens zwei Strangströmen sowieso durchgeführt wird, beispielsweise bei hochdynamischen Antrieben, kann aus zwei Strangströmen ein Vergleichsstrom I_{S} berechnet werden, der zur Steuerung des Verfahrens herangezogen werden kann.

### Gewerbliche Anwendbarkeit

Das Verfahren eignet sich für alle elektrischen Antriebe, ob Einphasen- oder Mehrphasen-Wechselstrommotoren, auch für Gleichstrommotoren und insbesondere für Motor-Pumpenaggregate.

## Patentansprüche

1. Verfahren zum Anlaufen eines drehzahlveränderlichen elektrischen Antriebes, bei dem
a) während des Anlaufvorganges bei sich erhöhendem Drehmoment des Antriebes der Anlaufstrom I_{A} erfaßt und mit einem Maximalstrom Iₘₐₓ verglichen wird,
b) bei Erreichen des Maximalstromes Iₘₐₓ der Absolutwert des Drehmomentes des Antriebes auf Null verringert und danach das Vorzeichen des Drehmomentes umgekehrt wird, worauf der Absolutwert des Drehmomentes mit dem neuen Vorzeichen erhöht wird,
c) die Verfahrensschritte gemäß a und b solange wiederholt werden, bis
c1) der Maximalstrom Iₘₐₓ nicht mehr erreicht wird und der Antrieb mit der gewünschten Drehrichtung ordnungsgemäß hochfährt,
oder
c2) der Maximalstrom Iₘₐₓ nicht mehr erreicht wird, der Antrieb aber die falsche Drehrichtung besitzt, worauf das Vorzeichen des Drehmomentes bei Erreichen der Grenzfrequenz f_{G} umgekehrt wird und danach der Antrieb mit der gewünschten Drehrichtung hochfährt,
oder
c3) eine bestimmte Anzahl von Drehmomentsänderungen vorgenommen wurde oder eine bestimmte Zeit abgelaufen ist, worauf der Antrieb abgeschaltet wird.

2. Verfahren zum Anlaufen eines drehzahlveränderlichen elektrischen Antriebes nach Anspruch 1, dadurch gekennzeichnet, daß
a) der Antrieb beim Anlaufvorgang mit einer Ständerfrequenz f_{S} erregt wird, wobei die Ständerfrequenz f_{S} so gewählt wird, daß der Anlaufstrom I_{A} einen Maximalstrom Iₘₐₓ nicht übersteigt,
b) bei Erreichen des Maximalstromes Iₘₐₓ der Absolutwert der Ständerfrequenz f_{S} und damit des Drehmomentes des Antriebes verringert und deren Vorzeichen umgekehrt wird.

3. Verfahren nach Anspruch 1 oder 2, dadurch gekennzeichnet, daß während des Anlaufvorganges nach Erreichen des Maximalstromes Iₘₐₓ die Motorspannung U_{M} schrittweise erhöht und nach Beendigung des Anlaufvorganges wieder auf einen normalen Betriebswert U_{M,N} eingestellt wird.

4. Verfahren nach einem der Ansprüche 1 bis 3, dadurch gekennzeichnet, daß als Anlaufstrom I_{A} der Zwischenkreisstrom verwendet wird.

5. Verfahren nach einem der Ansprüche 1 bis 3, dadurch gekennzeichnet, daß als Anlaufstrom I_{A} ein aus mindestens zwei der Strangströme berechneter Vergleichsstrom verwendet wird.

6. Vorrichtung zur Durchführung des Verfahrens nach einem der Ansprüche 1 bis 5, gekennzeichnet durch eine Strommeßeinrichtung (4a,4b,4c), welche den Anlaufstrom I_{A} erfaßt, und Vergleichsmittel (6), welche den gemessenen Anlaufstrom I_{A} mit einem vorgegebenen Strom vergleichen, sowie Mittel (7), durch welche bei Erreichen des Maximalstromes Iₘₐₓ der Absolutwert des Drehmomentes des Antriebes auf Null verringert, danach das Vorzeichen des Drehmomentes umgekehrt und schließlich der Absolutwert des Drehmomentes mit dem neuen Vorzeichen erhöht wird.

7. Vorrichtung nach Anspruch 6, dadurch gekennzeichnet, daß die Strommeßeinrichtung (4a) im Zwischenstromkreis angeordnet ist.

8. Vorrichtung nach Anspruch 6, dadurch gekennzeichnet, daß die Strommeßeinrichtung (4b,4c) mindestens in zwei Strängen angeordnet ist, wobei Mittel (8) vorgesehen sind, die aus mindestens zwei Strangströmen einen Vergleichswert erzeugen.

## Claims

1. Method for starting a variable-speed electrical drive, in which
a) during the starting process and as the drive torque increases, the starting current I_{A} is detected and is compared with a maximum current Iₘₐₓ,
b) on reaching the maximum current Iₘₐₓ, the absolute value of the drive torque is reduced to zero and, after this, the mathematical sign of the torque is reversed, whereupon the absolute value of the torque is increased with the new mathematical sign,
c) the method steps according to a and b are repeated until
c1) the maximum current Iₘₐₓ is no longer reached and the drive accelerates correctly in the desired rotation direction,
or
c2) the maximum Iₘₐₓ is no longer reached, but the drive is rotating in the incorrect direction, whereupon the mathematical sign of the torque is reversed on reaching the cut-off frequency f_{G} and, after this, the drive accelerates in the desired rotation direction,
or
c3) a specific number of torque changes have been carried out or a specific time has passed, whereupon the drive is switched off.

2. Method for starting a variable-speed electrical drive according to Claim 1, characterized in that
a) during the starting process, the drive is excited with a stator frequency f_{S}, the stator frequency fs being selected such that the starting current I_{A} does not exceed a maximum current Iₘₐₓ,
b) on reaching the maximum current Iₘₐₓ, the absolute value of the stator frequency f_{S} and thus the drive torque are reduced, and their mathematical signs are reversed.

3. Method according to Claim 1 or 2, characterized in that, during the starting process, when the maximum current Iₘₐₓ is reached, the motor voltage U_{M} is increased in steps and, once the starting process has been completed, is set to a normal operating value U_{M,N} once again.

4. Method according to one of Claims 1 to 3, characterized in that the intermediate circuit current is used as the starting current I_{A}.

5. Method according to one of Claims 1 to 3, characterized in that a comparative current which is calculated from at least two of the currents in the individual windings is used as the starting current I_{A}.

6. Apparatus for carrying out the method according to one of Claims 1 to 5, characterized by a current measurement device (4a, 4b, 4c) which detects the starting current I_{A}, and comparison means (6) which compare the measured starting current I_{A} with a predetermined current, as well as means (7) using which the absolute value of the drive torque is reduced to zero on reaching the maximum current Iₘₐₓ, after which the mathematical sign of the torque is reversed and, finally, the absolute value of the torque is increased with the new mathematical sign.

7. Apparatus according to Claim 6, characterized in that the current measurement device (4a) is arranged in the intermediate circuit.

8. Apparatus according to Claim 6, characterized in that the current measurement device (4b, 4c) is arranged in at least two of the individual windings, with means (8) being provided which produce a comparison value from at least two currents in the individual windings.

## Revendications

1. Procédé pour le démarrage d'un entraînement électrique à vitesse de rotation variable, dans lequel
a) pendant l'opération de démarrage, lors de l'augmentation du couple de l'entraînement, on détermine le courant de démarrage I_{A} et on le compare à un courant maximal Iₘₐₓ,
b) lorsque le courant maximal Iₘₐₓ est atteint, la valeur absolue du couple de l'entraînement est abaissée à zéro et le signe du couple est ensuite inversé, la valeur absolue du couple augmentant alors avec le nouveau signe,
c) on répète les opérations suivant a et b jusqu'à ce que
c1) le courant maximal Iₘₐₓ ne soit plus atteint et que l'entraînement accélère régulièrement avec le sens de rotation désiré,
ou
c2) le courant maximal Iₘₐₓ ne soit plus atteint, mais que l'entraînement possède le mauvais sens de rotation, le signe du couple étant alors inversé lorsque la fréquence limite f_{G} est atteinte et l'entraînement accélérant ensuite avec le sens de rotation désiré,
ou
c3) on ait procédé à un nombre déterminé de changements du couple ou qu'un temps déterminé se soit écoulé, l'entraînement étant alors déconnecté.

2. Procédé pour le démarrage d'un entraînement électrique à vitesse de rotation variable suivant la revendication 1, caractérisé en ce que
a) pendant l'opération de démarrage, l'entraînement est excité avec une fréquence statorique f_{S}, la fréquence statorique f_{S} étant choisie d'une façon telle que le courant de démarrage I_{A} ne dépasse pas un courant maximal Iₘₐₓ,
b) lorsque le courant maximal Iₘₐₓ est atteint, la valeur absolue de la fréquence statorique f_{S} et dès lors aussi celle du couple de l'entraînement est abaissée et leur signe est inversé.

3. Procédé suivant la revendication 1 ou 2, caractérisé en ce que, pendant l'opération de démarrage, après avoir atteint le courant maximal Iₘₐₓ, on augmente par étapes la tension du moteur U_{M} et, après l'achèvement de l'opération de démarrage, on la règle à nouveau à une valeur de service normale U_{M,N}.

4. Procédé suivant l'une des revendications 1 à 3, caractérisé en ce que l'on utilise comme courant de démarrage I_{A} le courant de circuit intermédiaire.

5. Procédé suivant l'une des revendications 1 à 3, caractérisé en ce que l'on utilise comme courant de démarrage I_{A} un courant de comparaison calculé à partir d'au moins deux des courants de phase.

6. Dispositif pour la mise en oeuvre du procédé suivant l'une des revendications 1 à 5, caractérisé par un dispositif de mesure du courant (4a, 4b, 4c), qui détecte le courant de démarrage I_{A}, et des moyens de comparaison (6), qui comparent le courant de démarrage mesuré I_{A} avec un courant prédéterminé, ainsi que des moyens (7) par lesquels, lorsque le courant maximal Iₘₐₓ est atteint, la valeur absolue du couple de l'entraînement est abaissée à zéro, ensuite le signe du couple est inversé et enfin la valeur absolue du couple est augmentée avec le nouveau signe.

7. Dispositif suivant la revendication 6, caractérisé en ce que le dispositif de mesure du courant (4a) est disposé dans le circuit de courant intermédiaire.

8. Dispositif suivant la revendication 6, caractérisé en ce que le dispositif de mesure du courant (4b, 4c) est disposé au moins dans deux conducteurs de phase, dans lequel il est prévu des moyens (8) qui produisent une valeur de comparaison à partir d'au moins deux courants de phase.
